# EUROPÄISCHE PATENTANMELDUNG

(11) **EP 0 786 608 A2**
(43) Veröffentlichungstag der Anmeldung: **30.07.1997**
(21) Anmeldenummer: 96118148.4
(22) Anmeldetag: 13.11.1996
(51) Int. Cl.: F16H 59/04

(54) **Aussenschaltung mit einer aus Kunststoff geformten Lagerungskugel für ein Wechselgetriebe eines Kraftfahrzeuges**

(30) Priorität: 24.01.1996 DE 19602382
(71) Anmelder: LEMFOERDER METALLWAREN AG., D-49441 Lemförde (DE)
(72) Erfinder: Ersoy, Metin, Dr., 65396 Walluf (DE)

(57) **Zusammenfassung**

Die Erfindung bezieht sich auf eine Außenschaltung für ein Wechselgetriebe eines Kraftfahrzeuges, bei der ein Schalthebel (1) mit einer Kugel (2) in einer Lagerschale (3) aus Kunststoff in einem Schalthebellagergehäuse (4) in einer Wählebene und winklig dazu in mehreren Schaltebenen beweglich gelagert ist und an sich seitlich im rechten Winkel zum Schalthebel erstreckenden Zapfen befestigte Bowdenzüge (7,(8)) die Bewegungen des Schalthebels (1) auf Schaltelemente des Wechselgetriebes übertragen. Bei der erfindungsgemäßen Lösung sind zwei sich im rechten Winkel zueinander in der Äquatorebene einer um das freie untere Ende des Schalthebels (1) geformten Kugel (2) aus Kunststoff radial zur Schalthebellängsachse erstreckende Zapfen (5,6) an ihrem radial äußeren Ende mittels je eines der Bowdenzüge (7,(8)) mit dem Schaltelement des Wechselgetriebes verbunden, wobei die Drahtseele eines der Bowdenzüge (7,(8)) jeweils universalgelenkig mit dem Ende eines der Zapfen (5,6) verbunden und der Metallschlauch der Bowdenzüge quer zur Zapfenlängsachse gegenüber dem Schalthebelgehäuse (4) festgelegt ist.

## Beschreibung

Die Erfindung bezieht sich auf eine Außenschaltung für ein Wechselgetriebe eines Kraftfahrzeuges nach dem Oberbegriff des Patentanspruches 1.

Bekannt sind diese Ausbildungsmerkmale aus der US-PS 4,693,135. Der Schalthebel dieser bekannten Ausbildung durchsetzt eine metallische Gelenkkugel, die mittels einer Lagerschale aus Kunststoff in einem Schalthebellagergehäuse allseitig beweglich gelagert und dabei in einer Schaltkulisse gegenüber der Fahrzeuglängsrichtung seitlich in einer Wählebene sowie in Fahrzeuglängsrichtung in Ebenen winklig dazu geführt ist. In der Äquatorebene der Gelenkkugel ist seitlich ein mit dem Schalthebel fest verbundener Zapfen angeordnet und am radial äußeren Ende über einen schwenkbar am Schalthebellagergehäuse angeordneten Winkelhebel universalgelenkig mit der Drahtseele eines Bowdenzuges verbunden, dessen Metallschlauch gegenüber dem Schalthebellagergehäuse festgelegt ist. Andererseits ist dieser Bowdenzug mit dem Schaltelement des Wechselgetriebes verbunden. Der Schalthebel ragt nach unten über die Gelenkkugel ein Stück hinaus, wobei ein zweiter Bowdenzug dieses Schalthebelende über beweglich angelenkte Zwischenglieder ebenfalls mit dem Schaltelement des Wechselgetriebes verbindet.

Aus DE 42 21 762 -A1- ist eine ähnliche Außenschaltung bekannt. Aus DE 38 08 272 -C2- ist die Herstellung der Gelenkkugel für die Schalthebellagerung in dem Schalthebelgehäuse aus Kunststoff an sich bekannt.

Außerdem gehören Konsolen- oder Joy-Stick-Schaltungen mit Seilzügen und einem Kreuzgelenk als Schalthebellagerung, besonders bei Transporterfahrzeugen, zum praktizierten Stand der Technik.

Zuvor dargestellte Konzepte zur Gestaltung einer Außenschaltung für das Wechselgetriebe eines Kraftfahrzeuges erfordern viele Einzelteile, die zueinander drehbeweglich gelagert sein müssen, so daß eine solche Außenschaltung kostspielig ist und bei unzulässigen Lagerspielen aufgrund notwendiger Toleranzen oder aufgrund des Verschleißes zu Geräuschbildungen neigt.

Aufgabe der Erfindung ist es, eine Außenschaltung nach dem Oberbegriff raumsparender und vor allem kostengünstiger, möglichst spielfrei und verschleißarm, auszubilden.

Zur Lösung dieser Aufgabe dienen Ausbildungsmerkmale nach dem Kennzeichen des Patentanspruches 1.

Eine solche Außenschaltung besitzt wenig Einzelteile und nur verschleißarme Lagerstellen, die jeweils aus einer Gelenkkugel und einer diese aufnehmenden Lagerschale aus einem abriebfesten Kunststoff mit guten Gleiteigenschaften bestehen. An das untere Ende des metallischen Schalthebels werden zwei sich radial im rechten Winkel zueinander angeordnete Zapfen befestigt bzw. angeschweißt und anschließend mit Kunststoff in Kugelform umspritzt, so daß die beiden Zapfen sich im rechten Winkel zueinander in der Äquatorebene der Kunststoffkugel erstrecken. An den Enden der beiden Zapfen sind Gelenkkugeln ausgebildet, deren zugehöriges Gelenkgehäuse an der Drahtseele von Bowdenzügen befestigt ist. Vorzugsweise werden diese universalgelenkigen Verbindungen der Bowdenzüge mit den sich in der Äquatorebene der Schalthebelgelenkkugel als Schnappgelenke ausgebildet, so daß das Gehäuse mit einer Schnappschale unter Materialverformung mit einer Vorspannung über die Gelenkkugel gedrückt werden kann. Das Schalthebellagergehäuse kann ebenfalls aus Kunststoff oder einem Aluminiumdruckguß bestehen.

Es werden insgesamt nur drei Kugelgelenkverbindungen für die komplette Schaltung benötigt, die kostengünstig und durch entsprechende Lagerschalen spielfrei und wartungsfrei gestaltet werden können. Von bekannten Ausbildungen mit Seilzugübertragungen der Schaltbewegungen auf ein Schaltelement des Wechselgetriebes unterscheidet sich die erfindungsgemäße Lösung vor allem dadurch, daß die beiden Zapfen radial in der Äquatorebene an der Schalthebelgelenkkugel befestigt sind und daß die Seilzüge und der Schalthebel sich im wesentlichen in parallel zueinander liegenden Ebenen bewegen. Die Außenschaltung kann daher auf engstem Raum untergebracht werden, worin ein weiterer Vorzug gegenüber dem Stande der Technik zu sehen ist.

In der Zeichnung ist schematisch ein Ausführungsbeispiel der Erfindungsmerkmale dargestellt. Es zeigen:
- Figur 1: einen vertikalen Schnitt einer Außenschaltung in Fahrzeuglängsrichtung,
- Figur 2: einen vertikalen Schnitt einer Außenschaltung quer zur Fahrzeuglängsrichtung,
- Figur 3: eine Draufsicht der Außenschaltung mit Schnitt durch den Schalthebel und
- Figur 4: einen vertikalen Schnitt einer Außenschaltung, deren Kugel und deren beide Zapfen einteilig aus Kunststoff im Spritzgußverfahren hergestellt sind.

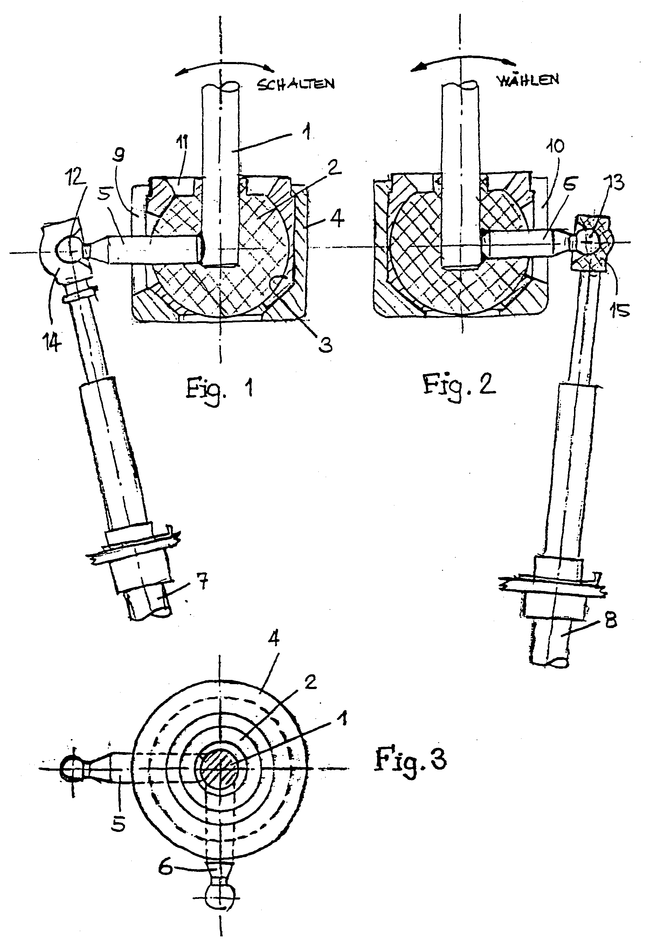

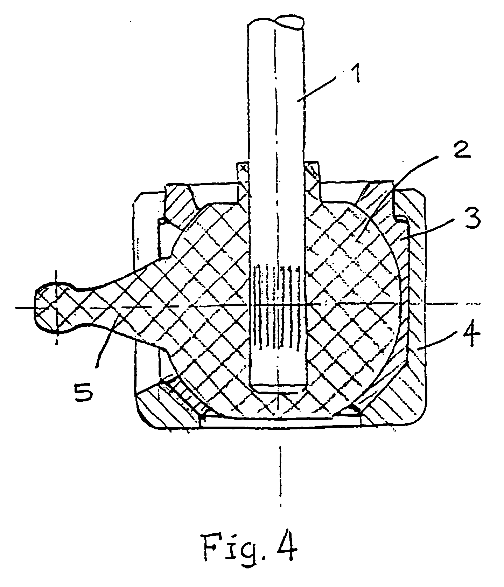

Bei dem dargestellten Ausführungsbeispiel der Außenschaltung ist der Schalthebel 1 mit einer Gelenkkugel 2 in einer Lagerschale 3 innerhalb eines Schalthebellagergehäuses 4 allseits drehbeweglich gelagert und bei dieser Bewegung innerhalb einer in der Zeichnung nicht dargestellten Schaltkulisse in einer Wählebene quer zur Fahrzeuglängsrichtung und in mehreren winklig zueinander liegenden Schaltebenen etwa parallel zur Fahrzeuglängsrichtung geführt. Die Schalthebelbewegungen werden über seitlich aus dem Schalthebellagergehäuse 4 herausgeführte Zapfen 5 und 6 durch Bowdenzüge 7 und 8 auf ein Schaltelement des auf der Zeichnung ebenfalls nicht dargestellten Wechselgetriebes übertragen. Metallische Zapfen 5 und 6 sind mit dem unteren Ende des ebenfalls aus Metall bestehenden Schalthebels 1 fest verschweißt, welches anschließend in eine umspritzte Kunststoffkugel 2 eingebettet wird, so daß die Zapfen 5 und 6 sich in der Äquatorebene erstrecken und einen rechten Winkel zueinander einnehmen, wie es aus der Figur 3 ersichtlich ist. Als eine besonders kostengünstige Alternative werden die Zapfen 5 und 6 und die Gelenkkugel 2 einteilig aus Kunststoff in einem Spritzvorgang gemeinsam hergestellt, wie es in der Figur 4 dargestellt ist. Die Zapfen 5 und 6 sind in Ausnehmungen 9 bzw. 10 der Lagerschale 3 und des Schalthebellagergehäuses 4 schwenkbeweglich. Die Schwenkbewegungen des Schalthebels 1 werden durch eine weitere Ausnehmung 11 der Lagerschale 3 und des schalthebellagergehäuses 4 ermöglicht, wobei der Werkstoff der Kunststoffkugel 2 sich innerhalb dieser Ausnehmung 11 halsartig um den Schalthebel 1 herum erstreckt, um harte Anschläge des Schalthebels am Schalthebellagergehäuse zu vermeiden.

Am Ende der Zapfen 5 und 6 sind jeweils Gelenkkugeln 12 und 13 ausgebildet, deren zugehörige Gehäuse 14 und 15 schnappschalenartig ausgebildet sind und aus Kunststoff bestehen, so daß sie unter Materialverformung mit elastischer Vorspannung über die Gelenkkugeln 12 bzw. 13 gedrückt werden können. Die Gehäuse 14 und 15 sind jeweils mit einer Drahtseele der Bowdenzüge 7 und 8 verbunden, deren äußerer Schlauch gegenüber dem Schalthebelgehäuse oder einem anderen Karosserieteil, mit dem das Schalthebelgehäuse fest verbunden ist, festgelegt ist, wie es aus den Figuren 1 und 2 hervorgeht.

### BEZUGSZEICHENLISTE:

- 1: Schalthebel
- 2: Gelenkkugel
- 3: Lagerschale
- 4: Schalthebellagergehäuse
- 5: Zapfen
- 6: Zapfen
- 7: Bowdenzug
- 8: Bowdenzug
- 9: Ausnehmung
- 10: Ausnehmung
- 11: Ausnehmung
- 12: Gelenkkugel
- 13: Gelenkkugel
- 14: Gelenkgehäuse
- 15: Gelenkgehäuse

## Patentansprüche

1. Außenschaltvorrichtung für ein Wechselgetriebe eines Kraftfahrzeugs, bei der ein Schalthebel mit einer Kugel in einer Lagerschale aus Kunststoff in einem Schalthebellagergehäuse in einer Wählebene und winklig dazu in mehreren Schaltebenen beweglich gelagert ist und an sich seitlich im rechten Winkel zum Schalthebel erstreckenden Zapfen befestigte Bowdenzüge die Bewegungen des Schalthebels auf Schaltelemente des Wechselgetriebes übertragen, wobei die Drahtseele des Bowdenzuges jeweils universalgelenkig mit dem Ende eines Zapfens verbunden und der Außenschlauch des Bowdenzuges quer zur Zapfenlängsachse jeweils gegenüber dem Schalthebelgehäuse festgelegt ist, dadurch gekennzeichnet, daß zwei sich im rechten Winkel zueinander in der Äquatorebene einer um das freie untere Ende des Schalthebels (1) geformten Kugel (2) aus Kunststoff radial zur Schalthebellängsachse erstreckende Zapfen (5,6) an ihrem radial äußeren Ende mittels je eines Bowdenzuges (7,8) mit dem Schaltelement des Wechselgetriebes verbunden sind.

2. Außenschaltung nach Anspruch 1, dadurch gekennzeichnet, daß die radial inneren Enden der beiden Zapfen (5,6) aus Metall mit dem Schalthebel (1) aus Metall verschweißt sind und die Kugel (2) für die Lagerung des Schalthebels aus Kunststoff im Spritzverfahren hergestellt ist.

3. Außenschaltung nach Anspruch 1 oder 2, dadurch gekennzeichnet, daß die universalgelenkige Verbindung der radial äußeren Enden der beiden Zapfen (5,6) mit der Drahtseele eines Bowdenzuges (7,8) aus einer Gelenkkugel (12,13) am Zapfenende und einer unter Materialverformung mit Vorspannung über diese Gelenkkugel gepreßten Schnappschale (14,15) aus Kunststoff besteht, die mit der Drahtseele des Bowdenzuges (7,8) verbunden ist.

4. Außenschaltung nach einem der Ansprüche 1 bis 3, dadurch gekennzeichnet, daß die Festlegung des Außenschlauches des Bowdenzuges (7,8) gegenüber dem Schalthebellagergehäuse (4) in Achsrichtung der Drahtseele der Bowdenzüge veränderbar ausgebildet ist.

5. Außenschaltung nach einem der Ansprüche 1 bis 3, dadurch gekennzeichnet, daß die beiden Zapfen (5,6) zusammen mit der Kugel (2) einteilig aus Kunststoff, z.B. im Spritzgußverfahren, hergestellt sind.
